# EUROPÄISCHE PATENTSCHRIFT

(11) **EP 3 532 885 B1**
(45) Veröffentlichungstag und Bekanntmachung des Hinweises auf die Patenterteilung: **07.06.2023**
(21) Anmeldenummer: 17797083.7
(22) Anmeldetag: 25.10.2017
(51) Int. Cl.: G02B 21/00, G01J 3/02, G01J 3/18, G01J 3/06

(54) **OPTISCHE ANORDNUNG, MULTISPOT-SCANNING-MIKROSKOP UND VERFAHREN ZUM BETREIBEN EINES MIKROSKOPS**
OPTICAL ARRANGEMENT, MULTI-SPOT SCANNING MICROSCOPE AND METHOD FOR OPERATING A MICROSCOPE
SYSTÈME OPTIQUE, MICROSCOPE À BALAYAGE MULTIPOINTS ET PROCÉDÉ PERMETTANT DE FAIRE FONCTIONNER UN MICROSCOPE

(30) Priorität: 25.10.2016 DE 102016120308
(43) Veröffentlichungstag der Anmeldung: 04.09.2019
(73) Patentinhaber: Carl Zeiss Microscopy GmbH, 07745 Jena (DE)
(72) Erfinder: WALD, Matthias, 07751 Jena (DE); ANHUT, Tiemo, 07749 Jena (DE); SCHWEDT, Daniel, 99423 Weimar (DE)
(74) Vertreter: Schiffer, Axel Martin
(86) Internationale Anmeldenummer: PCT/EP2017/077245
(87) Internationale Veröffentlichungsnummer: WO 2018/077920

(56) Entgegenhaltungen:
- EP-A2- 1 691 180
- WO-A2-2009/134719
- US-A1- 2005 012 927

## Beschreibung

Die vorliegende Erfindung betrifft in einem ersten Aspekt ein Multispot-Scanning-Mikroskop nach dem Oberbegriff des Anspruchs 1. Außerdem betrifft die Erfindung ein Verfahren zum Betreiben eines Mikroskops.

In der Laser-Scanning-Mikroskopie soll bei bestimmten Anwendungen das von einer Probe emittierte Licht spektral aufgelöst detektiert werden. Dazu gibt es umfangreichen Stand der Technik. Beispielsweise ist in DE 10 2014 116 782 A1 ein System beschrieben, welches eine spektral aufgelöste Detektion des von einem beleuchteten Probenort zurückgestrahlten Lichts ermöglicht. DE 198 42 288 A1 beschreibt dieses Prinzip, das auch im Laser-Scanning-Mikroskop Verwendung findet. Die für die spektral aufgelöste Detektion notwendige Dispersion kann dabei mit einem Prisma oder einem Gitter generiert werden.

Bei weiteren Varianten werden, beispielsweise mit Spiegeln, in einer Spektrallinienebene Spektrallinien ausgewählt, die dann auf sogenannte Airyscan-Detektoren geführt werden. Zusätzlich besteht nun die Aufgabe, Spektralfarbenteile, die nicht zurückreflektiert werden (das kann auch das gesamte Spektrum sein, wenn die Spiegel komplett aus dem Strahlengang herausgefahren werden), zu erfassen. Da als hochempfindlicher Sensor mit mehreren Pixeln derzeit nur Zeilensensoren für die konfokale Mikroskopie geeignet sind, besteht die Aufgabe darin, die Informationen aus der Probe möglichst geschickt auf diesen Zeilensensor abzubilden. Wegen der Multi-Spot-Anregung, bei der Anregungslicht auf oder in mehrere Fokalbereiche auf oder in einer zu untersuchenden Probe fällt, stammt dabei die Informationen von diesen mehreren unterschiedlichen Orten auf oder in der Probe. Typischerweise liegt die Information in der Art vor, dass in einer Koordinatenrichtung die Fokalpunkte, die in dieser Beschreibung auch einfach als Spots bezeichnet werden, aufgereiht sind und in einer dazu senkrechten Achse das jeweils zu einem Fokalpunkt gehörende Spektrum in einer Raumrichtung aufgespreizt ist.

WO 2009/134719 A2 betrifft eine Vorrichtung und ein Verfahren zur optischen Spektroskopie, wobei eine dispersive räumliche Aufspaltung des zu vermessenden Lichts in zwei unterschiedliche nichtparallelen Raumrichtungen erfolgt. Zum Drehen eines Leuchtfelds kommen dabei Prismen zum Einsatz.

Gegenstand von US 2005/0012927 A1 ist eine Detektionsvorrichtung für die Laser-Scanning-Microscopy, bei der nachzuweisendes Detektionslicht in spektrale Bestandteile aufgetrennt wird und die spektralen Bestandteile in mindestens einer Raumrichtung fokussiert und im Anschluss daran auf unterschiedliche Detektoren geleitet und nachgewiesen werden.

In EP 1 691 180 A2 ist ein Detektor für die spektrale Detektion in einem Laser-Scanning-Mikroskop beschrieben. Bei diesem Detektor sind Mittel zum spektralen Aufspalten des nachzuweisenden Lichts und außerdem zum Leiten der einzelnen spektralen Komponenten des nachzuweisenden Lichts eine Mikrolinsenanordnung vorhanden.

Als eine Aufgabe der Erfindung kann angesehen werden, ein Multispot-Scanning-Mikroskop und ein Verfahren zum Betreiben eines Mikroskops bereitzustellen, bei denen eine besonders variable Ausnutzung eines Detektors ermöglicht wird.

Diese Aufgabe wird durch das Multispot-Scanning-Mikroskop mit den Merkmalen des Anspruchs 1 und das Verfahren zum Betreiben eines Mikroskops mit den Merkmalen des Anspruchs 14 gelöst.

Das gattungsgemäße Multispot-Scanning-Mikroskop ist erfindungsgemäß dadurch weitergebildet, dass zum Leiten des Detektionslichts in die Detektionsebene eine verzerrende Optik vorhanden ist, die strahlabwärts von der dispersiven Einrichtung und strahlaufwärts von einer Detektionsebene angeordnet ist, und dass eine Dreheinrichtung vorhanden ist zum relativen Verdrehen eines Leuchtfelds des spektral aufgetrennten Detektionslichts und der verzerrenden Optik.

Bei einem erfindungsgemäßen Verfahren zum Betreiben eines erfindungsgemäßen Mikroskops wird mit der Dreheinrichtung in Abhängigkeit einer Anzahl von Beleuchtungsspots eine Drehstellung des Leuchtfelds relativ zu der verzerrenden Optik eingestellt.

Vorteilhafte Weiterbildungen des erfindungsgemäßen Mikroskops sowie zweckmäßige Varianten des erfindungsgemäßen Verfahrens werden in der folgenden Beschreibung, insbesondere mit Bezug auf die abhängigen Ansprüche und die Figuren beschrieben.

Als optische Anordnungen werden im Rahmen dieser Beschreibung Gruppen von optischen und mechanischen Komponenten bezeichnet, die gemeinsam eine bestimmte optische Funktion erfüllen. Die optischen und mechanischen Komponenten können als eine Baugruppe gebildet oder in einem gemeinsamen Gehäuse untergebracht sein.

Als Detektionsstrahlengang wird der Weg des von einer untersuchten Probe zurückgestrahlten Lichts von der Probe bis zu einer Nachweiseinrichtung, beispielsweise einer Kamera, verstanden. Insbesondere sind damit auch die einzelnen strahlführenden und strahlmanipulierenden Komponenten, wie beispielsweise Spiegel, Linsen, Prismen und Gitter, gemeint.

Als Multispot-Scanning-Mikroskop wird ein Mikroskop bezeichnet, bei dem eine zu untersuchende Probe gleichzeitig mit einer Mehrzahl von Fokalpunkten, die auch als Fokalspots oder kurz Spots bezeichnet werden, abgescannt wird. Das Scannen kann auch als Rastern bezeichnet werden.

Mit dem Begriff der Detektionsebene wird im Rahmen dieser Beschreibung die Ebene bezeichnet, in welcher ein Detektor, beispielsweise ein Kamerachip, angeordnet wird. Üblicherweise befindet sich die Detektionsebene in einer zur Probenebene optisch konjugierten Ebene, also in einer Zwischenbildebene.

Als dispersive Einrichtungen werden Komponenten bezeichnet, mit welchen eine spektrale räumliche Aufspaltung eines Lichtbündels möglich ist. Unter einem spektralen räumlichen Aufspalten oder, was gleichbedeutend ist, einer dispersiven Aufspaltung werden im Rahmen dieser Beschreibung insbesondere Situationen verstanden, bei denen unterschiedliche spektrale Komponenten eines Strahlbündels in unterschiedliche Raumrichtungen geleitet und in diesem Sinn aufgespalten werden. In bestimmten nichtverschwindenden Wellenlängenintervallen und Raumrichtungsintervallen erfolgt dabei eine stetige Abbildung einer Wellenlänge zu einer Raumrichtung. Das bedeutet, dass Wellenlängen, die dicht beieinander liegen, auch in Raumrichtungen geleitet werden, die nahe beieinanderliegen. Weiter voneinander entfernte Wellenlängen, werden dementsprechend in Raumrichtungen geleitet, die weiter voneinander entfernt sind.

Unter dem Begriff einer verzerrenden Optik wird für die Zwecke der vorliegenden Erfindung eine Optik verstanden, die von einer rotationssymmetrischen Optik, wie sie etwa durch sphärische Linsen bereitgestellt wird, abweicht.

Prinzipiell kann als verzerrende Optik jede Optik eingesetzt werden, die das Bildfeld bei entsprechender relativer Verdrehung so verzerrt, dass die zu messenden räumlichen oder spektralen Freiheitsgrade beispielsweise auf einer Sensorzeile zu liegen kommen.

Diese technische Wirkung kann beispielsweise erreicht werden, wenn die verzerrende Optik mindestens eine brechende und/oder spiegelnde anamorphotische Optik aufweist.

Besonders bevorzugt sind Ausführungsvarianten der Erfindung, bei denen die verzerrende Optik eine Zylinderoptik ist. Beispielsweise können für die Zylinderoptik ein oder mehrere Zylinderspiegel zum Einsatz kommen. Besonders vorteilhaft können ergänzend oder alternativ Zylinderlinsen eingesetzt werden.

Grundsätzlich können für die verzerrende Optik aber auch feste beugende Optiken, wie Phasenmasken, und/oder verstellbare beugende Optiken, beispielsweise räumliche Lichtmodulatoren (SLMs spatial light modulator) zum Einsatz kommen, um dem Leuchtfeld die benötigte Phasenfunktion aufzuprägen.

Als Zylinderoptik wird eine optische Komponente oder eine Mehrzahl von optischen Komponenten bezeichnet, deren Fokussiereigenschaften in unterschiedlichen Raumrichtungen unterschiedlich sind. Insbesondere wird mit dem Begriff Zylinderoptik eine Optik bezeichnet, bei der in einer Koordinatenrichtung, nämlich entlang einer bestimmten Achse, die auch als Achse dieser Zylinderoptik bezeichnet wird, keinerlei Fokussierung erfolgt.

Zur Beschreibung von relativen Anordnungen von Komponenten in einem Strahlengang werden die Begriffe strahlabwärts und strahlaufwärts verwendet. Dabei bedeutet beispielsweise für den Detektionsstrahlengang das eine von einer ersten Komponente strahlabwärts gelegene zweite Komponente sich näher am Detektor befindet als die erste Komponente, die sich strahlaufwärts von der zweiten Komponente befindet.

Wesentlich für die vorliegende Erfindung ist der Begriff des Leuchtfelds. Damit ist die geometrisch-räumliche Verteilung der Intensität der elektromagnetischen Strahlung gemeint. Beispielsweise entsteht nach Durchtritt eines weißen Lichtstrahls durch ein aus mehreren Stäben bestehendes Beugungsgitter ein spektral aufgespreiztes Leuchtfeld, dass sich in einer zur Erstreckungsrichtung der Gitterstäbe senkrechten Ebene erstreckt.

Unter einer Dreheinrichtung werden im Rahmen der vorliegenden Erfindung technische Mittel verstanden, mit denen es möglich ist, ein Leuchtfeld relativ zu anderen Komponenten im Raum zu verdrehen.

Mit relativem Verdrehen ist dabei gemeint, dass es nur auf die relative Drehstellung ankommt, sodass zunächst und prinzipiell noch offen ist, welche der beiden zueinander in Bezug gesetzten Komponenten gegenüber der Umgebung aktiv gedreht werden und welche Komponenten relativ zur Umgebung ruhen.

Unter dem Begriff einer Mikroskopoptik werden im Rahmen der vorliegenden Beschreibung alle optischen Komponenten verstanden, die üblicherweise im Strahlengang eines Mikroskops vorhanden sind, insbesondere ein Mikroskopobjektiv.

Als Beleuchtungsstrahlengang wird derjenige Strahlweg bezeichnet, den das Anregungslicht von einer Lichtquelle bis zur Probe nimmt. Auch die optischen Komponenten, die das Anregungslicht von der Lichtquelle bis zur Probe manipulieren, leiten und formen werden in ihrer Gesamtheit als Beleuchtungsstrahlengang bezeichnet.

Unter dem Begriff Licht, insbesondere Beleuchtungslicht, Anregungslicht und Detektionslicht, wird elektromagnetische Strahlung in Wellenlängenbereichen verstanden, die in der Mikroskopie typischerweise zum Einsatz kommen oder auftreten. Das Beleuchtungslicht, das insbesondere im infraroten, sichtbaren oder ultravioletten Spektralbereich liegen kann, wird typischerweise durch Laser als Lichtquellen bereitgestellt. Bevorzugt ist das erfindungsgemäße Mikroskop ein Laser-Scanning-Mikroskop.

Weil eine wesentliche Mikroskopietechnik die Fluoreszenzmikroskopie ist, spricht man auch von Anregungslicht, weil durch dieses Licht typischerweise die Fluoreszenz von Farbstoffen, mit denen eine Probe präpariert ist, angeregt wird.

Als Scanner kommen bei einem erfindungsgemäßen Mikroskop grundsätzlich bekannte Komponenten, beispielsweise galvanometrische Scanner zum Einsatz.

Für die Multispot-Scanning-Mikroskopie werden außerdem häufig Multilinsenarrays verwendet, die zur Bereitstellung von mehreren Beleuchtungsspots, insbesondere einer variablen Anzahl von Beleuchtungsspots, dienen.

Als Probenebene wird in der Regel diejenige Ebene bezeichnet, in der sich eine Probe befindet und die auf einen Detektor scharf abgebildet wird. Das bedeutet, dass der Detektor sich in einer zu dieser Probenebene optisch konjugierten Ebene oder, mit anderen Worten, in einer Zwischenbildebene, befindet

Als Steuereinheit können für das erfindungsgemäße Mikroskop grundsätzlich bekannte, insbesondere programmierbare, elektronische Komponenten, beispielsweise PCs oder Mikrocontroller, zum Einsatz kommen.

Bei der Multispot-Scanning-Mikroskopie können eine Anzahl von Beleuchtungsspots, mit denen eine Probe abgerastert wird und konkrete Wegverläufe für das Abrastern variabel gewählt werden. Bei typischen Varianten werden bis zu vier Beleuchtungsspots verwendet, wobei diese Beleuchtungsspots eine Probe beispielsweise unmittelbar aufeinander folgend abtasten. Alternativ können die verschiedenen Beleuchtungsspots jeweils unterschiedliche Probenbereiche so abtasten, dass ein gewünschter Bereich der Probe insgesamt vollständig abgetastet wird.

Als ein wesentlicher Gedanke der vorliegenden Erfindung kann angesehen werden, eine Einrichtung bereitzustellen, mit der ein Leuchtfeld, welches mindestens ein räumlich aufgespreiztes Spektrum, typischerweise aber mehrere aufgespreizte Spektren, aufweist, zunächst geeignet relativ zu einer verzerrenden Optik zu verdrehen und anschließend das Leuchtfeld nur in einer Richtung mithilfe der verzerrenden Optik zu fokussieren. Dadurch kann, sofern die Drehwinkel geeignet gewählt werden, die räumlichspektrale Information erhalten werden und ein zur Verfügung stehender Detektor kann bestmöglich ausgenutzt werden.

Ein wichtiger Vorteil des erfindungsgemäßen Mikroskops kann darin gesehen werden, dass mit vergleichsweise einfachen optischen Mitteln der Detektionsstrahlengang auf unterschiedliche Betriebsmodi eines Multispot-Scanning-Mikroskops eingestellt werden kann. Als Betriebsmodi kommt beispielsweise für die spektral auflösende Scanning-Mikroskopie das Abtasten mit einem Beleuchtungsspot, mit zwei Beleuchtungsspots und mit vier Beleuchtungsspots in Betracht. Für die nicht spektral auflösende Scanning-Mikroskopie sind auch Betriebsmodi interessant, bei denen eine Probe mit vergleichsweise vielen Beleuchtungsspots gleichzeitig abgerastert wird. Weil bei dem erfindungsgemäßen Mikroskop nur wenige optische Komponenten zum Einsatz kommen, sind Lichtverluste gering und es wird nur wenig Bauraum benötigt.

Bei dem erfindungsgemäßen Mikroskop ist in der Detektionsebene ein Detektor angeordnet.

Bei diesem Detektor kann es sich um grundsätzlich bekannte, beispielsweise zweidimensionale segmentierte Detektoren handeln. Solche Detektoren finden beispielsweise bei der Airyscan-Mikroskopie Verwendung. Besonders vorteilhaft kann aber bei dem erfindungsgemäßen Mikroskop der Detektor ein Zeilendetektor sein, wobei insbesondere eine Längsrichtung des Zeilendetektors parallel zu einer Achse der verzerrenden Optik ausgerichtet ist. Bei einer solchen Positionierung ist es möglich, die Spektren, die zu dem von der Probe, beispielsweise von vier verschiedenen Beleuchtungsspots, zurückgestrahlten Detektionslicht gehören, aneinander anschließend mit der verzerrenden Optik auf den Zeilendetektor abzubilden.

Bei besonders bevorzugten Varianten des erfindungsgemäßen Mikroskops ist der Detektor ein GaAsP-Detektor, ein Photomultiplier, ein SPAD-Array oder eine schnelle Kamera.

In DE 10 2014 107 606 A1 wird eine zweidimensionale Detektionsmatrix verwendet, wobei in einer Richtung eine Messung verschiedener räumlicher Kanäle stattfindet, während in der anderen Richtung das Spektrum zum jeweiligen räumlichen Kanal aufgespannt wird. Das Drehen des Spektrums, wie es in Absatz [0073] und dem Doppelpfeil in Fig 5 von DE 10 2014 107 606 A1 angedeutet ist, erfolgt durch Drehung des Dispersionselements (Prisma). Allerdings wird in DE 10 2014 107 606 A1 nicht, wie bei Ausführungsbeispielen der vorliegenden Erfindung, das Leuchtfeld relativ zum Sensor um eine Achse verdreht, die die optische Achse des Leuchtfelds enthält und im Wesentlichen normal zur Sensoroberfläche steht. Vielmehr wird in DE 10 2014 107 606 A1 eine Translation des Spektrums auf einer zweidimensionalen Sensormatrix beschrieben, welche durch die Drehung des Dispersionsprismas hervorgerufen wird. Das wesentliche Element der vorliegenden Anmeldung ist es aber gerade, durch eine relative Verdrehung des Leuchtfeldes gegenüber der Sensoranordnung, welche aus einer verzerrenden, beispielsweise, anamorphotischen Optik, welche gestellfest zu einem linienförmigen Sensor angeordnet ist, die effiziente Nutzung eines eindimensionalen, sozusagen vektoriellen, Sensors für verschiedene Messzwecke zu ermöglichen. In einem einfachen Fall wird das durch ein bildfelddrehendes Prisma (Dove-Prisma oder Abbe-König-Prisma) erreicht. Ein solches Element ist in DE 10 2014 107 606 A1 nicht beschrieben.

In DE 10 2014 107 606 A1 kommt ein zweidimensionaler Matrixsensor zum Einsatz, bei welchem die Spektren der Spots jeweils gleichzeitig gemessen werden können.

Die Zweck der vorliegenden Erfindung ist es, beispielsweise mit einem eindimensionalen Sensor, beispielsweise einer Zeile aus Detektorelementen, entweder spektral oder räumlich auflösend und damit pro Leuchtfleck spektral integriert messen zu können.

Grundsätzlich kommt es für die Verwirklichung der Erfindung darauf an, dass bei dem Mikroskop das Leuchtfeld relativ zu der verzerrenden Optik gedreht wird. Dieses Verdrehen kann bei einer Ausgestaltung der Erfindung dadurch realisiert werden, dass die verzerrende Optik mit der Dreheinrichtung relativ zu der dispersiven Einrichtung verdrehbar ist. Weil es außerdem auf eine konstante relative Lage der verzerrenden Optik zu dem Detektor ankommt, muss dabei ein in der Detektionsebene positionierter Detektor mit der verzerrenden Optik mitgedreht werden. In diesem Fall ist die Dreheinrichtung wesentlich eine mechanische Dreheinrichtung, welche die verzerrende Optik und einen gegebenenfalls vorhandenen Detektor relativ zu der dispersiven Einrichtung verdreht. Das Leuchtfeld als solches bleibt im Raum, zum Beispiel bezogen auf die dispersive Einrichtung, unverändert.

Bei besonders bevorzugten Varianten der Erfindung steht die verzerrende Optik relativ zur dispersiven Einrichtung fest. Das bedeutet, dass, insbesondere zwischen der dispersiven Einrichtung und der verzerrenden Optik, eine optische Dreheinrichtung zum Drehen des Leuchtfelds vorhanden ist. Der mechanische Aufwand ist bei dieser Variante vergleichsweise kleiner.

Theoretisch sind auch Varianten denkbar, bei denen sowohl die verzerrende Optik mit dem Detektor als auch das Leuchtfeld selbst verdreht wird. Wesentlich ist nur, dass eine gewünschte relative Drehstellung zwischen dem Leuchtfeld und der verzerrenden Optik erzielt wird.

Ein räumliches Manipulieren eines Leuchtfelds kann beispielsweise mit drehbaren Spiegeln bewerkstelligt werden. Bei vorteilhaften Varianten des erfindungsgemäßen Mikroskops kann die Dreheinrichtung deshalb mindestens einen Drehspiegel aufweisen.

Bei besonders bevorzugten Alternativen des erfindungsgemäßen Mikroskops weist die Dreheinrichtung mindestens ein Drehprisma auf. Mit Hilfe von Drehprismen ist ein Verdrehen eines Leuchtfelds besonders elegant und effektiv möglich.

Ein Drehprisma kann prinzipiell an jeder beliebigen Stelle des Strahlengangs in dem erfindungsgemäßen Mikroskop zwischen der verzerrenden Optik und der dispersiven Einrichtung positioniert werden. Besonders bevorzugt kann ein Drehprisma aber an einem Ort einer engsten Einschnürung des Strahlengangs, insbesondere, bezogen auf einen Strahlengang eines angeschlossenen Mikroskops, in einer Pupillenebene, angeordnet sein. Dadurch wird der Vorteil erreicht, dass vergleichsweise kleine Drehprismen zum Einsatz kommen können. Diese sind zum einen kostengünstiger als größere Drehprismen und erfordern außerdem weniger Bauraum.

Besonders bevorzugt kann das Drehprisma bei dem erfindungsgemäßen Mikroskop ein Abbe-König-Prisma oder ein Dove-Prisma sein.

Bei besonders bevorzugten Varianten des erfindungsgemäßen Mikroskops ist eine Achse der Relativdrehung zwischen der verzerrenden Optik, beispielsweise der Zylinderoptik, und dem Leuchtfeld quer, insbesondere senkrecht, orientiert zu einer Achse der verzerrenden Optik.

Die Drehachse der Relativdrehung zwischen Leuchtfeld und der verzerrenden Optik, und insbesondere dem Sensor, enthält bevorzugt die optische Achse des Leuchtfelds. Besonders bevorzugt ist die Drehachse der Relativdrehung quer und insbesondere senkrecht oder normal zu einer Sensoroberfläche orientiert.

Für die dispersive Einrichtung des erfindungsgemäßen Mikroskops kommt es darauf an, dass die gewünschte räumliche Aufspaltung oder Aufspreizung der in dem Detektionslicht enthaltenen spektralen Komponenten erreicht wird. Typischerweise ist bei einem erfindungsgemäßen Mikroskop als dispersive Einrichtung eine brechende und/oder eine beugende Komponente vorhanden.

Beispielsweise kann als brechende Komponente ein Prisma und/oder als lichtbeugende Komponente ein Beugungsgitter vorhanden sein.

Im Hinblick auf die verzerrende Optik kommt es funktional darauf an, dass die gewünschten Fokussiereigenschaften in einer Koordinatenrichtung erzielt werden, sodass ein Zeilendetektor in seiner Querrichtung, also senkrecht zur Erstreckungsrichtung der Zeile, möglichst optimal ausgeleuchtet wird, und dass andererseits in Richtung der Zeile keine oder nur eine schwache Fokussierung erfolgt. Besonders bevorzugt sind Varianten des erfindungsgemäßen Mikroskops, bei denen die verzerrende Optik durch eine einzige Zylinderlinse gebildet ist. Durch die Verwendung nur einer einzigen Zylinderlinse können Transmissionsverluste auf einem Minimum gehalten werden.

Die räumlichen Dimensionen eines aus einer Mikroskopoptik austretenden Leuchtfelds des Detektionslichts werden durch die im Strahlengang der Mikroskopoptik vorhandenen optischen Komponenten bestimmt. Diese müssen nicht notwendig zu den erhältlichen oder zum Einsatz kommenden Detektoren passen. Unter diesen Gesichtspunkten sind Varianten des erfindungsgemäßen Mikroskops von Vorteil, bei denen zum Anpassen eines Abbildungsmaßstabs, insbesondere an Abmessungen eines verwendeten Detektors, eine Teleskopoptik mit einer ersten und einer zweiten Linse vorhanden ist. Zweckmäßig können dabei die verzerrende Optik und die Dreheinrichtung, insbesondere das Drehprisma, zwischen der ersten und der zweiten Linse des Teleskops angeordnet sein. Ein weiterer Vorteil einer solchen Teleskopstrecke ist, dass dadurch weiterer Bauraum und eine weitere Pupillenebene bereitgestellt werden, der beispielsweise die Positionierung eines Drehprismas erleichtert.

Alternativ kann zum Anpassen eines Abbildungsmaßstabs, insbesondere an Abmessungen eines verwendeten Detektors, auch eine Zoom-Optik vorhanden sein. Diese Variante erlaubt es beispielsweise, den Strahlengang an unterschiedliche Detektoren, die unterschiedliche geometrische Abmessungen aufweisen, anzupassen.

Bei besonders vorteilhaften Varianten des erfindungsgemäßen Verfahrens kann , je nach Stellung der Dreheinrichtung, das Spektrum von einem Beleuchtungsspot, oder es können die Spektren von zwei Beleuchtungsspots oder die Spektren von vier Beleuchtungsspots auf den Detektor abgebildet werden. Die Variante, bei der das Spektrum eines einzigen Beleuchtungsspots auf den Detektor abgebildet wird, entspricht verfahrensmäßig dem was als Single-Spot-Scanner bekannt ist und ist als Spezialfall auch mit dem hier beschriebenen erfindungsgemäßen Verfahren realisierbar.

Prinzipiell ist es aber auch möglich, die jeweils auf unterschiedliche Beleuchtungsspots zurückgehenden Lichtbündel so auf den Zeilendetektor abzubilden, dass die Erstreckungsrichtung des Lichtspektrums senkrecht steht auf der Erstreckungsrichtung des Zeilensensors. Bei einer Ausgestaltung, bei der die verzerrende Optik mit dem Detektor relativ zu der dispersiven Einrichtung feststeht und im unverdrehten Zustand des Leuchtfelds das Spektrum eines Beleuchtungsspots auf den Zeilendetektor abgebildet werden kann, ist dazu eine Verdrehung des Leuchtfelds um 90° notwendig. Bei einer solchen Positionierung geht zwar die spektrale Auflösung vollständig verloren, es kann aber das Beleuchtungslicht von besonders vielen Beleuchtungsspots gleichzeitig, jeweils spektral integriert, gemessen werden.

Durch die vorliegende Erfindung wird also eine Optik bereitgestellt, die eine flexible Anordnung der zur Verfügung stehenden Informationen auf einen Zeilensensor ermöglicht. Dabei kann der Optikaufwand sehr gering gehalten werden. Es kann eine hohe Transmission gewährleistet werden und der technische Aufwand ist insgesamt gering.

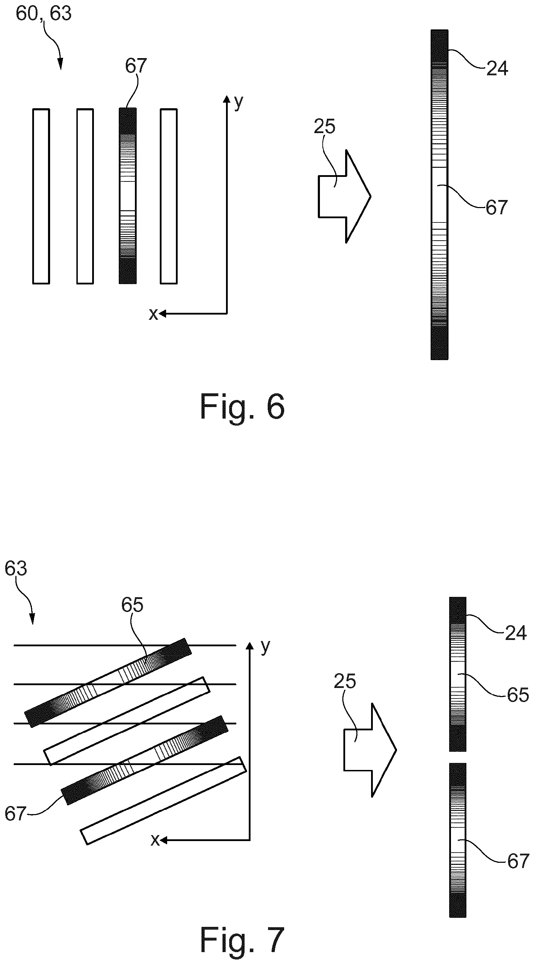

Die oben angegebene Aufgabe wird also durch die geschickte Verwendung einer verzerrenden Optik und eines Drehprismas gelöst. Mit einer verzerrenden Optik wird das Licht in einer Achse (x-Achse in den Figuren 6 bis 9) fokussiert, während das Licht in der anderen, dazu senkrechten Achse (y-Achse in den Figuren 6 bis 9) nicht beeinflusst wird. Mit einer rotationssymmetrischen Abbildungsoptik kann ergänzend ein benötigter Abbildungsmaßstab auf den Zeilensensor realisiert werden. Alternativ können auch die Zylinderlinse und der Zeilensensor gemeinsam gedreht werden, was aber technisch relativ aufwändig ist, weil der üblicherweise gekühlte Zeilensensor vergleichsweise groß ist.

Wenn die Zylinderlinse räumlich feststeht, ist die zeilenartige Ausleuchtung des Sensors unabhängig vom Drehwinkel des Drehprismas festgelegt und zwar in der Ausrichtung der Zylinderlinsenachse. Die Wirkung des Drehprismas kann man sich so vorstellen, dass das Feld der Spektrallinienebene in die gewünschte Ausrichtung gedreht wird, bevor es mit der verzerrenden Optik, insbesondere der Zylinderoptik, auf den Zeilensensor fokussiert wird. Damit kann eine im Prinzip beliebige Nutzung des Zeilensensors erreicht werden. Der Sensor ist damit, je nach Aufgabe, variabel nutzbar. Wenn hier von Fokussieren die Rede ist, so soll darunter im Wesentlichen ein Konzentrieren oder Leiten der Lichtenergie auf die Detektorfläche, also die Detektorzeile, verstanden werden und nicht ein Fokussieren im Sinn einer optischen Abbildung im Bereich einer Beugungsbegrenzung.

Prinzipiell können auch flächige Detektoren eingesetzt werden. Mit dem erfindungsgemäßen Mikroskop kann dann die benötigte Detektorfläche auf eine Zeile reduziert werden und die übrige Detektorfläche kann für andere Detektionsaufgaben, beispielsweise für andere gleichzeitig durchgeführte Mikroskopietechniken, genutzt werden.

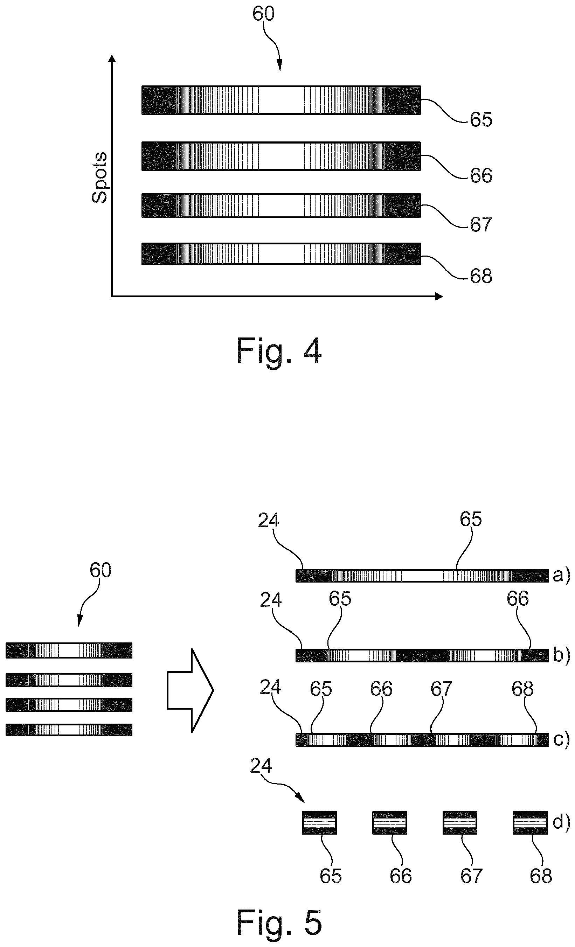

Als Detektoren können auch schnelle Kameras, SPADs und/oder Photomultiplier, beispielsweise Multichannelplates zum Einsatz kommen. Die Beleuchtung in einem entsprechend ausgestalteten Mikroskop kann grundsätzlich verschieden erfolgen. Einerseits können alle Anregungsspots die gleiche spektrale Zusammensetzung aufweisen. In diesem Fall enthalten bei einer Probe, die mit diesen Multispots abgescannt wird, alle Emissionskanäle eine ähnliche spektrale Information, abhängig naturgemäß vom jeweils beleuchteten Ort in der Probe. Weiterhin ist es aber auch möglich und kann vorteilhaft sein, wenn der spektrale Inhalt der Anregungsspots verschieden ist. In diesem Fall kann man gezielt eine definierte spektrale Emission, zum Beispiel eines Farbstoffs, mit genau diesem Beleuchtungsfleck erreichen. Dann kann sich der spektrale Inhalt der einzelnen Zeilen unterscheiden (siehe Figur 4). Die spektrale Emissionsverteilung kann gegebenenfalls noch durch Spiegel und Blenden, wie sie beispielsweise in der deutschen Patentanmeldung Nr. 10 2016 119 730.0 beschrieben sind, beeinflusst werden.

Weitere Eigenschaften und Vorteile der Erfindung werden im Folgenden mit Bezug auf die beigefügten schematischen Figuren erläutert. Darin zeigen:
- Figur 1:: ein erstes Ausführungsbeispiel einer optischen Anordnung für ein erfindungsgemäßes Mikroskop;
- Figur 2:: ein zweites Ausführungsbeispiel einer optischen Anordnung für ein erfindungsgemäßes Mikroskop;
- Figur 3:: ein Ausführungsbeispiel eines erfindungsgemäßen Multispot-ScanningMikroskops;
- Figur 4:: ein Diagramm zur Erläuterung von Eigenschaften des Detektionsfelds bei der spektral auflösenden Multispot-Scanning-Mikroskopie;
- Figur 5:: Möglichkeiten der Verteilung der optischen Information auf einen Zeilensensor bei einem spektral auflösenden Multispot-Scanning-Mikroskop;
- Figur 6:: ein Diagramm zur Erläuterung der Abbildung eines zu einem Fokalpunkt gehörenden Spektrums auf einen Zeilensensor in einer ersten Drehstellung einer optischen Anordnung für ein erfindungsgemäßes Mikroskop;
- Figur 7:: ein Diagramm zur Erläuterung der Abbildung der Spektren von zwei Fokalpunkten auf einen Zeilensensor in einer zweiten Drehstellung einer optischen Anordnung für ein erfindungsgemäßes Mikroskop;
- Figur 8:: ein Diagramm zur Erläuterung der Abbildung der Spektren von vier Fokalpunkten auf einen Zeilensensor in einer dritten Drehstellung einer optischen Anordnung für ein erfindungsgemäßes Mikroskop;
- Figur 9:: ein Diagramm zur Erläuterung der Abbildung des Detektionslichts von vier Fokalpunkten auf einen Zeilensensor zur nicht spektral auflösenden Detektion in einer vierten Drehstellung einer optischen Anordnung für ein erfindungsgemäßes Mikroskop;
- Figur 10:: ein drittes Ausführungsbeispiel einer optischen Anordnung für ein erfindungsgemäßes Mikroskop in einer ersten Drehstellung;
- Figur 11:: das Ausführungsbeispiel aus Figur 10 in einer zweiten Drehstellung;
- Figur 12:: ein viertes Ausführungsbeispiel einer optischen Anordnung für ein erfindungsgemäßes Mikroskop in einer ersten Drehstellung;
- Figur 13:: das vierte Ausführungsbeispiel in einer zweiten Drehstellung;
- Figur 14:: das vierte Ausführungsbeispiel in einer dritten Drehstellung; und
- Figur 15:: das vierte Ausführungsbeispiel in einer vierten Drehstellung.

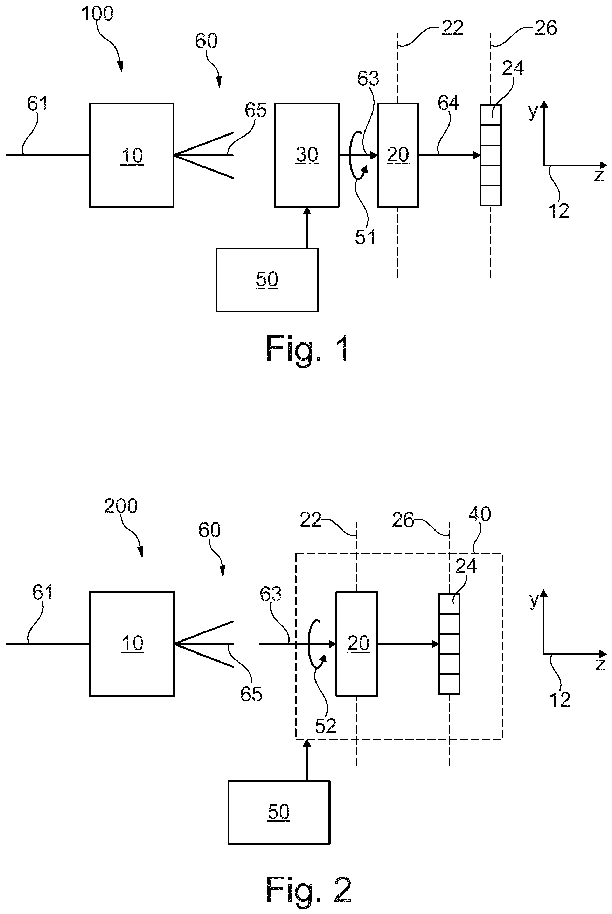

Ein erstes Ausführungsbeispiel einer optischen Anordnung 100 für ein erfindungsgemäßes Mikroskop wird mit Bezug auf Figur 1 erläutert. Gleiche und gleichwirkende Bestandteile und Komponenten sind in den Figuren in der Regel mit denselben Bezugszeichen versehen.

Die in Figur 1 gezeigte optische Anordnung 100 für ein erfindungsgemäßes Mikroskop weist als wesentliche Bestandteile eine dispersive Einrichtung 10, eine Dreheinrichtung 30 mit Ansteuerung 50, eine verzerrende Optik 20 und eine Detektionsebene 26 auf. Im gezeigten Beispiel handelt es sich bei der verzerrenden Optik um eine Zylinderoptik 20. Zur Beschreibung der Raumrichtungen soll ein Koordinatensystem 12 Ihnen. Eine Achse 22 der Zylinderoptik 20 und ein in der Detektionsebene 26 angeordneter Zeilendetektor 24 erstrecken sich in der y-Richtung. Die x-Achse erstreckt sich senkrecht zur yz-Ebene.

Auf die dispersive Einrichtung 10, bei der es sich beispielsweise um ein Beugungsgitter handeln kann, fällt in der in Figur 1 schematisch dargestellten Situation ein Lichtbündel 61. Dieses Lichtbündel 61 stammt von einem Beleuchtungsspot in einer in Figur 1 nicht dargestellten Probe, die sich in einem ebenfalls nicht gezeigten Mikroskop befindet. Das Lichtbündel 61 wird von der dispersiven Einrichtung 10 in ein Spektrum 65 in y-Richtung aufgespreizt, wie schematisch in Figur 1 gezeigt. Eventuell vorhandene Spektren von weiteren Beleuchtungsspots befinden sich bei einer anderen x-Position, d.h. bezogen auf die Papierebene vor oder hinter dem Spektrum 65. Die zu unterschiedlichen Beleuchtungsspots gehörenden Spektren liegen also in x-Richtung gesehen über- oder hintereinander.

Wäre die dispersive Einrichtung 10 ein einfaches Gitter, würden sich die Gitterstäbe in Figur 1 senkrecht zur Papierebene in x-Richtung erstrecken. Die aufgespreizten Spektren, insbesondere das Spektrum 65, bildet beziehungsweise bilden das Leuchtfeld 60, das auf die Dreheinrichtung 30 trifft. Bei der Dreheinrichtung 30 kann es sich beispielsweise um ein Drehprisma handeln, das von mechanischen und elektronischen Mitteln, die durch die Steuereinheit 50 verwirklicht sind, gedreht werden kann. Aus der Dreheinrichtung 30 tritt ein gedrehtes oder verdrehtes Leuchtfeld 63 aus und gelangt zur Zylinderoptik 20. Eine azimutale Drehrichtung ist dabei durch einen umlaufenden Pfeil 51 angedeutet. Die Drehachse selbst ist parallel zur z-Achse.

Die Zylinderoptik 20 fokussiert das einfallende Leuchtfeld 63 in x-Richtung, das heißt senkrecht zur Papierebene der Figur 1 und senkrecht zur y- und z-Richtung (siehe Koordinatensystem 12). In y-Richtung hingegen erfolgt durch die Zylinderoptik 20 keine Fokussierung, da deren Achse 22 sich in y-Richtung erstreckt. Das in dieser Weise fokussierte Leuchtfeld 64 fällt auf den Zeilendetektor 24. Mit der Dreheinrichtung 30 kann also eine relative Drehstellung des Leuchtfelds 63 bezogen auf die Zylinderoptik 20 variiert werden. Das ermöglicht eine variable Abbildung der zu unterschiedlichen Beleuchtungsspots gehörenden Lichtspektren auf ein und denselben Zeilendetektor 24. Weitere Einzelheiten hierzu werden im Zusammenhang mit den Figuren 4 bis 15 erläutert.

In Figur 2 ist ein weiteres Ausführungsbeispiel einer optischen Anordnung 200 für ein erfindungsgemäßes Mikroskop gezeigt, bei der eine veränderbare Drehstellung des auf die Zylinderoptik 20 eintreffenden Leuchtfelds 63 dadurch erzielt wird, dass die Zylinderoptik 20 zusammen mit dem Zeilendetektor 24 mit einer Dreheinrichtung 40 relativ zur dispersiven Einrichtung 10 gedreht wird. Das Leuchtfeld 60 als solches wird bei dieser Variante räumlich nicht manipuliert, das heißt dass das aus der dispersiven Einrichtung 10 austretende Leuchtfeld 60 im Prinzip identisch ist zu dem auf die Zylinderoptik 20 eintreffenden Leuchtfeld 63. Die azimutale Drehrichtung der Zylinderoptik 20 ist in Figur 2 schematisch durch den Pfeil 52 dargestellt. Die Richtung der Drehachse selbst ist wieder parallel zur z-Richtung. Die Dreheinrichtung 40, die von einer Steuereinheit 50 angesteuert wird, ist bei der Variante in Figur 2 wesentlich mechanischer Natur, denn es kommt darauf an, die Zylinderoptik 20 und den Detektor 24 relativ zu der dispersiven Einrichtung 10 im Hinblick auf die Drehstellung zu positionieren.

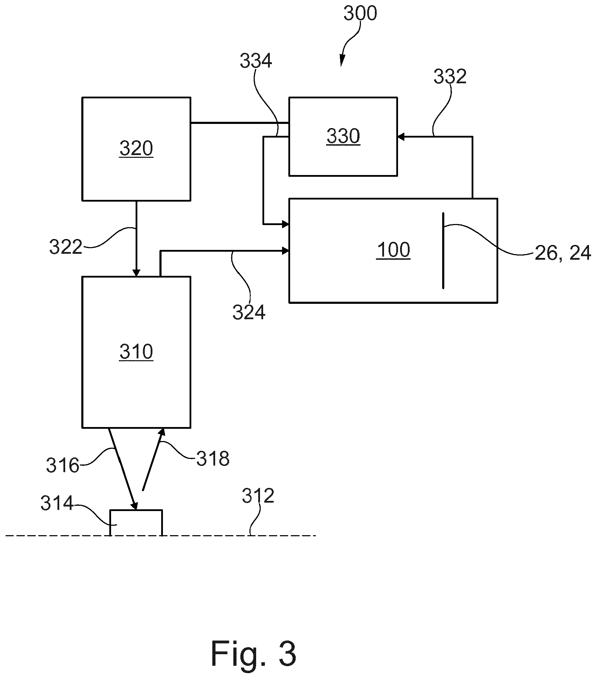

Figur 3 zeigt schematisch ein erfindungsgemäßes Mikroskop 300. Dieses weist als wesentliche Bestandteile eine Mikroskopoptik 310, eine Lichtquellen-Einheit 320, eine Probenebene 312 mit einer dort positionierten und zu untersuchenden Probe 314, eine optische Anordnung 100 und schließlich eine Steuereinheit 330 auf. Von der Lichtquellen-Einheit 320 ausgesandtes Anregungslicht 322 gelangt in die Mikroskopoptik 310, die insbesondere einen Scanner und ein Mikroskopobjektiv aufweist (in Figur 3 nicht gezeigt) und wird beispielsweise, schematisch veranschaulicht durch den Pfeil 316, auf mehrere Beleuchtungsspots auf der Probe 314 fokussiert. Beispielsweise werden vier Beleuchtungsspots gleichzeitig über die Probe 314 gescannt. Von den durch die Beleuchtungsspots beleuchteten Teilen der Probe wird Licht 318 zurückgestrahlt und über die Mikroskopoptik 310 zurückgeleitet. Aus der Mikroskopoptik 310 als Leuchtfeld 324 austretendes Detektionslicht tritt in die optische Anordnung 100 ein und kann dort, wie zuvor im Zusammenhang mit Figur 1 beschrieben, von einem in der Detektionsebene 26 positionierten Zeilendetektor 24 nachgewiesen werden. Die optische Anordnung 100 kann von einer Steuereinheit 330, die über eine schematisch angedeutete Wirkverbindung 334 mit der optischen Anordnung 100 verbunden ist, angesteuert werden. Von dem Detektor 24 gelieferte Messdaten 332 können, zumindest vorläufig, von der Steuereinheit 330, bei der es sich beispielsweise um einen PC oder eine vergleichbare Recheneinrichtung handeln kann, ausgewertet werden. Die Steuereinheit 330 kann außerdem auch zum Ansteuern der Lichtquellen-Einheit 320 dienen.

Grundlegende Eigenschaften eines Leuchtfelds 60 bei der Multispot-Scanning-Mikroskopie, wie es sich nach Durchgang des Detektionslichts durch die dispersive Einrichtung 10 einer optischen Anordnung darstellt, werden im Zusammenhang mit Figur 4 erläutert. In einem Koordinatensystem sind dort schematisch insgesamt vier Spektren 65, 66, 67, 68 dargestellt, die jeweils von unterschiedlichen Beleuchtungsspots auf einer Probe stammen. Die horizontale Koordinatenachse in Figur 4 entspricht der y-Achse in den Figuren 1 und 2. Wenn alle Beleuchtungsspots spektral identisch angeregt werden, werden die Spektren 65, 66, 67, 68, abhängig naturgemäß von der Probenzusammensetzung am jeweiligen Ort des Beleuchtungsspots, vergleichsweise ähnlich aussehen. Prinzipiell kann aber bereits die Anregung der unterschiedlichen Beleuchtungsspots spektral unterschiedlich sein. Dann können auch die Spektren 65, 66, 67, 68 im Einzelnen deutliche Unterschiede aufweisen. Die Ausdehnung der Spektren 65, 66, 67, 68 in Richtung der horizontalen Achse in Figur 4 und der Abstand dieser Spektren in Richtung der vertikalen Achse in Figur 4 ist gegeben durch die Mikroskopoptik 310 und die dispersive Einrichtung 10 und gegebenenfalls durch weitere im Strahlengang vorhandene Komponenten.

Eine grundlegende Aufgabenstellung bei der Multispot-Scanning-Mikroskopie ist es, die Spektren 65, 66, 67, 68 möglichst effektiv nachzuweisen. Hierzu stehen insbesondere GaAsP-Detektoren zur Verfügung, die aber im Wesentlichen nur als Zeilendetektoren verfügbar sind. Die Aufgabe ist also, diese Spektren auf ein und denselben Zeilendetektor abzubilden. Figur 5 zeigt mehrere Varianten, wie das geschehen kann. Figur 5a) zeigt die Abbildung eines einzigen Spektrums 65 auf einen Zeilendetektor 24. In Figur 5b) werden zwei Spektren 65, 66 auf den Zeilendetektor 24 und in Figur 5c) alle vier Spektren 65, 66, 67, 68 aneinander anschließend auf den Zeilendetektor 24 abgebildet. Einen Sonderfall zeigt Figur 5d). Die Spektren 65, 66, 67, 68 sind dort jeweils um 90° gedreht und werden alle auf den Zeilendetektor 24 geleitet. Wegen der Verdrehung um 90° und weil der Zeilendetektor 24 in Figur 5d) nur in der horizontalen Richtung nicht aber in der dazu senkrechten Richtung ortsauflösend ist, geht die spektrale Auflösung in der in Figur 5d) gezeigten Situation verloren. Gleichwohl kann das erwünscht sein, beispielsweise wenn das von einer größeren Anzahl von Beleuchtungsspots zurückgestrahlte Licht, jeweils spektral integriert, nachgewiesen werden soll.

Die Situationen der Figuren 5a) bis 5d) werden im Folgenden noch einmal im Zusammenhang mit den Figuren 6 bis 9 sowie 12 bis 15 betrachtet.

In den Figuren 6 bis 9 sind jeweils die gedrehten Leuchtfelder 63 gezeigt, die im Anschluss mit der Zylinderoptik 20 und gegebenenfalls weiteren optischen Komponenten auf den Zeilendetektor 24 abgebildet werden. Die Wirkung der Zylinderoptik 20 und der eventuell vorhandenen weiteren optischen Komponenten ist in den Figuren 6 bis 9 schematisch durch den nach rechts weisenden Pfeil 25 veranschaulicht.

Figur 6 zeigt zunächst, dass sich die verschiedenen Spektren des Leuchtfelds 60, von denen ihn Figur 6 nur das Spektrum 67 gezeigt ist, in x-Richtung hintereinander liegen und sich in y-Richtung erstrecken. Bei der in Figur 6 dargestellten Situation wird mit einer erfindungsgemäßen optischen Vorrichtung ein einziges Spektrum 67 eines Beleuchtungsspots auf den Zeilendetektor 24 abgebildet.

Im Vergleich dazu werden bei der in Figur 7 gezeigten Situation, die Figur 5b) entspricht, zwei Spektren 65, 67 aneinander anschließend auf den Zeilendetektor 24 abgebildet. Dies wird dadurch erreicht, dass, wie oben im Zusammenhang mit Figur 1 beschrieben, das Leuchtfeld 63 gegenüber dem aus der dispersiven Einrichtung 10 austretenden Leuchtfeld 60 verdreht ist. Der Drehwinkel, um den das Leuchtfeld 60 gedreht werden muss, ergibt sich im Einzelnen aus dem Abstand der Spektren 65, 67 im Leuchtfeld 60 und aus der Ausdehnung des Leuchtfelds in y-Richtung. Wird dieser Winkel zu klein gewählt, wird der Detektor 24 nicht optimal ausgenutzt. Wird er zu groß gewählt, überlappen sich die Spektren 65 und 67 auf dem Detektor 24.

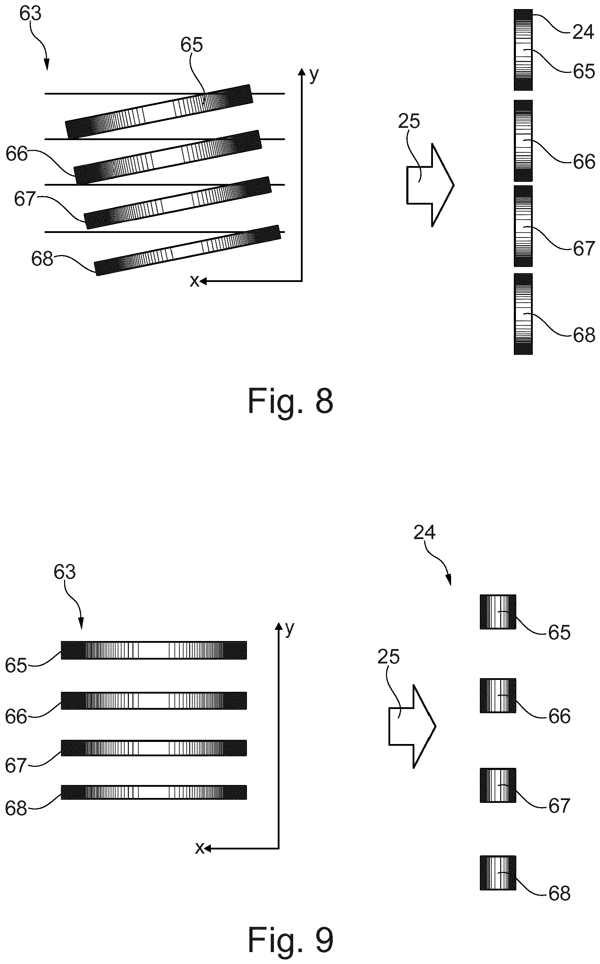

Die zu Figur 5c) korrespondierende Situation ist in Figur 8 dargestellt. Dort werden die Spektren 65, 66, 67, 68 gleichzeitig aneinander anschließend auf den Zeilendetektor 24 abgebildet. Ein Vergleich mit Figur 7 zeigt, dass das Leuchtfeld dabei wegen des nur noch halb so großen Abstands zwischen den beiden Spektren bei gleichbleibender Ausdehnung der Spektren in y-Richtung nur um einen kleineren Winkel verdreht werden muss.

Figur 9 schließlich zeigt die Figur 5d) entsprechende Situation, bei der das Leuchtfeld 63 durch die Dreheinrichtung 30 (siehe Figur 1) um 90° gegenüber dem auf die Dreheinrichtung 30 einfallenden Leuchtfeld 60 verdreht ist. Dabei wird das Licht aus allen Spektren 65, 66, 67, 68 auf den Zeilendetektor 24 abgebildet, wobei jedoch die spektrale Auflösung verloren geht. Dieser Betriebsmodus kann erwünscht sein, wenn das Detektionslicht einer großen Anzahl von Beleuchtungsspots gleichzeitig gemessen werden soll.

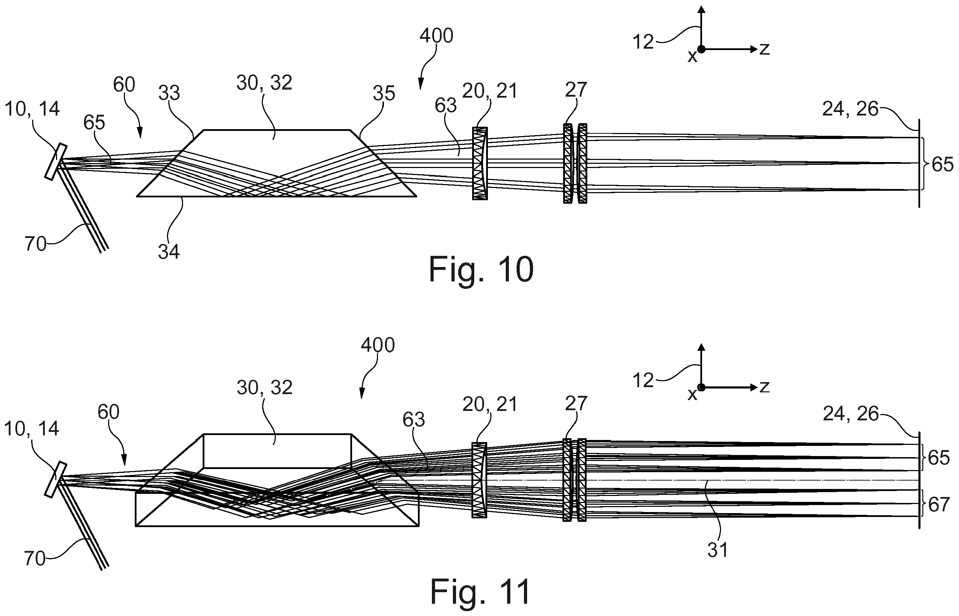

Eine dritte Ausführungsvariante einer optischen Anordnung 400 für ein erfindungsgemäßes Mikroskop wird mit Bezug auf die Figuren 10 und 11 beschrieben. Darin ist als dispersive Einrichtung 10 ein reflektierendes Beugungsgitter 14 vorhanden. Das einfallende Detektionslicht 70 wird durch dieses Beugungsgitter 14 spektral in der Papierebene (yz-Ebene) aufgespalten. Das so entstandene Leuchtfeld 60 trifft auf eine Eintrittsseite 33 eines drehbaren Dove-Prismas 32, durch welches bei der Variante aus Figur 10 die Dreheinrichtung 30 verwirklicht ist. Nach Reflexion an einer Reflexionsfläche 34 des Dove-Prismas 32 tritt ein gedrehtes Leuchtfeld 63 an einer Austrittsseite 35 aus dem Dove-Prisma 32 aus. Der Winkel, um den das aus dem Dove-Prisma 32 austretende Leuchtfeld 63 im Vergleich zu dem eintretenden Leuchtfeld 60 verdreht ist, hängt dabei von der Drehstellung des Dove-Prismas 32 um eine in Figur 10 horizontal in der Papierebene liegende Achse ab. Die Drehachse des Dove-Prismas 32 liegt parallel zur z-Richtung. Der Drehwinkel, um den das Leuchtfeld 63 gegenüber dem Leuchtfeld 60 verdreht ist, ist dabei wegen der Reflexion des Leuchtfelds an der Reflexionsfläche 34 doppelt so groß wie der Winkel, um den das Dove-Prisma 32 aus derjenigen Position verdreht ist, in der das Leuchtfeld 60 unverändert durch das Dove-Prisma 32 hindurchtritt. Bei der in Figur 10 gezeigten Situation befindet sich das Dove-Prisma 32 in dieser Neutralposition, das heißt das in Figur 10 das Leuchtfeld 63 gegenüber dem auf das Dove-Prisma 32 einfallenden Leuchtfeld 60 nicht verdreht ist.

Im Unterschied dazu ist das Dove-Prisma 32 bei der in Figur 11 dargestellten Situation um die parallel zur z-Richtung liegende Drehachse gedreht. Die Drehachse ist in Figur 11 durch eine gepunktete horizontale Linie 31 veranschaulicht. Das Leuchtfeld 63 trifft jeweils auf die Zylinderoptik 20, die bei der in den Figuren 10 und 11 gezeigten Variante durch eine einzige Zylinderlinse 21 gebildet ist. Die Fokussierung der Zylinderlinse 21 erfolgt dabei in einer Richtung senkrecht zur Papierebene, d.h. in der x-Richtung, wohingegen, wie ersichtlich, in der Papierebene durch die Zylinderoptik 20 keine Fokussierung erfolgt. Das aus der Zylinderoptik 20 austretende Licht wird schließlich mit einer rotationssymmetrischen Doppellinse 27 in die Detektionsebene 26, in der ein (in den Figuren 10 und 11 nicht gezeigter) Zeilendetektor angeordnet sein kann, abgebildet.

Der Zeilendetektor muss dergestalt in der Detektionsebene positioniert werden, dass er in der Fokallinie oder Fokalzeile der durch die Zylinderoptik 20 und die Doppellinse 27 gegebenen optischen Anordnung liegt. Die in Figur 10 dargestellte Situation korrespondiert mit den Situationen der Figuren 5a) und 6, das heißt es wird ein einziges Spektrum 65 auf den Zeilendetektor abgebildet. Die weiteren Spektren liegen in Figur 10 vor oder hinter der Papierebene. Prinzipiell wäre es auch möglich, einen zweidimensional ausgedehnten und auflösenden Detektor einzusetzen. Weil solche Detektoren aber derzeit nicht mit den gewünschten Schnelligkeitseigenschaften erhältlich sind, kann die Erfindung nutzbringend eingesetzt werden. Bei der in Figur 11 dargestellten Situation werden, vergleichbar den Figuren 5b) und 7 durch die Verdrehung des Leuchtfelds 63 im Vergleich zum Leuchtfeld 60 zwei Spektren 65, 67 gleichzeitig in derselben Ebene (in Figur 11 ist das die Papierebene) aneinander anschließend in die Detektionsebene 26 abgebildet.

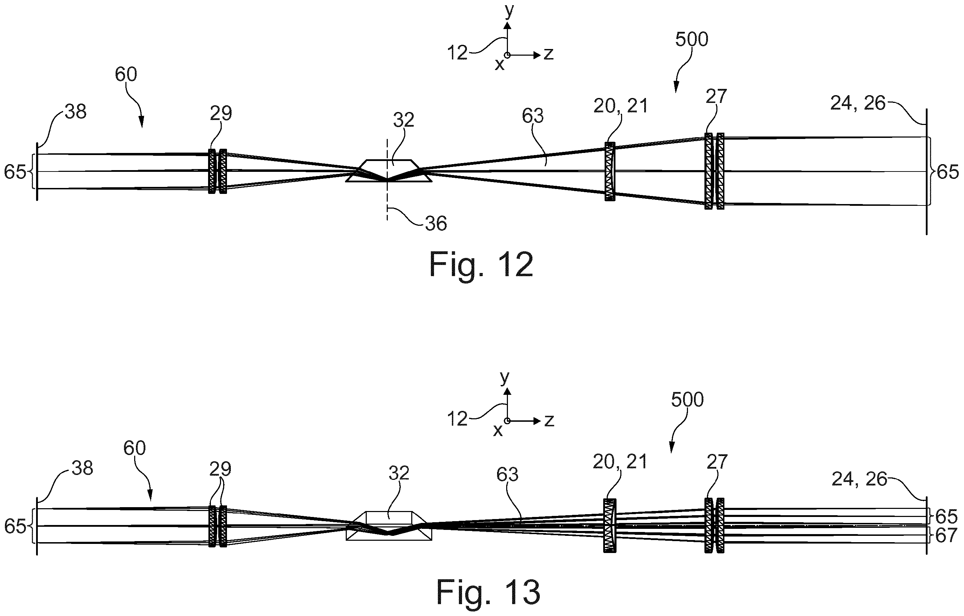

Eine weitere Variante einer optischen Anordnung 500 für ein erfindungsgemäßes Mikroskop wird in verschiedenen Betriebsstellungen im Zusammenhang mit den Figuren 12 bis 15 erläutert. Die optische Anordnung 500 weist Ähnlichkeiten mit dem in den Figuren 10 und 11 dargestellten Ausführungsbeispiel 400 auf. In den Figuren 12 bis 15 ist die dispersive Einrichtung nicht dargestellt. In den Figuren 12 bis 15 ist durch die rotationssymmetrischen Doppellinsen 27 und 29 eine Teleskopstrecke gebildet. Das Dove-Prisma 32 ist dabei jeweils an einem Ort der engsten Strahleinschnürung positioniert. Dieser Ort liegt bezogen auf den Strahlengang eines in den Figuren 12 bis 15 nicht dargestellten Mikroskops in einer Pupillenebene 36. Jeweils auf der linken Seite der Abbildungen 12 bis 15 tritt das von einer Zwischenbildebene 38 ausgehende Leuchtfeld 60 in die optische Anordnung 500 ein. In der Papierebene (yz-Ebene) liegt dabei das Spektrum 65, das von einem ersten Beleuchtungsspot stammt. Hinter der Papierebene (das heißt in x-Richtung verschoben, siehe Koordinatensystem 12) liegen weiteren Spektren 66, 67, 68, die von weiteren Beleuchtungsspots stammen.

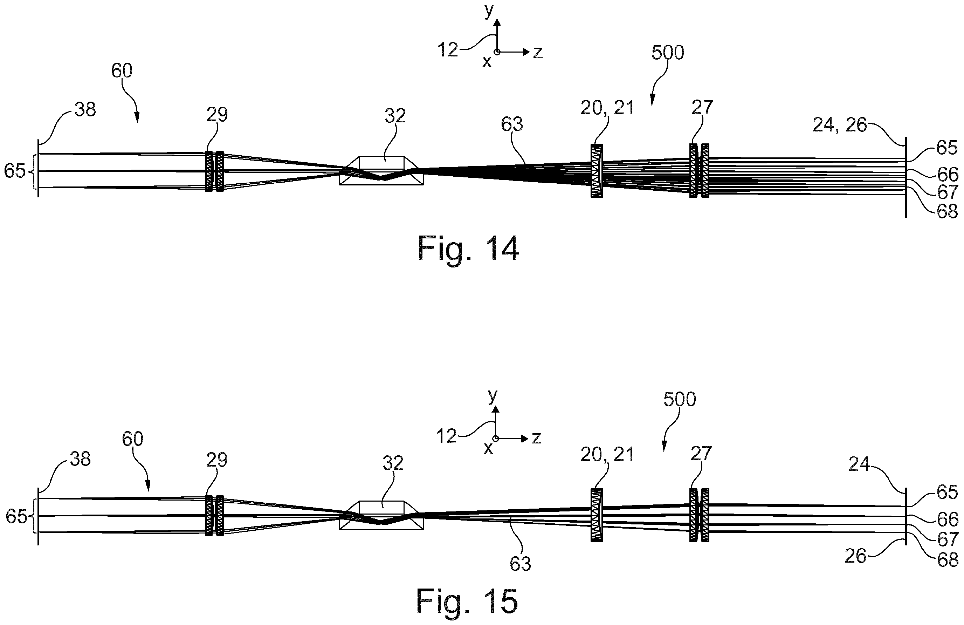

Über die Doppellinse 29 gelangt das Leuchtfeld 60 auf das Dove-Prisma 32. Durch das Dove-Prisma 32 wird das Leuchtfeld 60 um eine parallel zur z-Achse liegende Drehachse verdreht (siehe Koordinatensystem 12 in den Figuren 12 bis 15) und aus dem Dove-Prisma 32 tritt das verdrehte Leuchtfeld 63 aus. In Figur 12 ist das Dove-Prisma 32 so positioniert, dass der Drehwinkel 0° ist, das heißt das Leuchtfeld 60 wird überhaupt nicht verdreht. In den in den Figuren 13 bis 15 gezeigten Situationen ist das Dove-Prisma 32 jeweils um unterschiedliche Winkel verdreht, was zu jeweils unterschiedlichen Drehungen des Leuchtfelds 63 im Vergleich zum eintretenden Leuchtfeld 60 führt. Durch die Wirkung der Zylinderoptik 20 werden in Figur 13, ähnlich wie in Figur 7, die beiden Spektren 65 und 67 aufeinanderfolgend auf den Zeilendetektor 24 abgebildet. In Figur 14 werden, ähnlich wie in Figur 8, alle vier Spektren 65, 66, 67, 68 aufeinanderfolgend auf den Zeilendetektor 24 abgebildet. In Figur 15 schließlich, wird das Leuchtfeld 60 durch das Dove-Prisma 32, wie bei Figur 9, um 90° gedreht, sodass das Licht von allen vier Spektren auf den Zeilendetektor 24 gelangt, von diesem aber, wegen der Verdrehung um 90°, spektral integriert nachgewiesen wird.

### Bezugszeichenliste

- 10: dispersive Einrichtung
- 12: Koordinatensystem
- 14: Beugungsgitter
- 20: verzerrende Optik, Zylinderoptik
- 21: Zylinderlinse
- 22: Achse von verzerrender Optik 20
- 24: Zeilendetektor
- 25: Pfeil
- 26: Detektionsebene
- 27: Doppellinse
- 29: Doppellinse, bildet mit Doppellinse 27 ein Teleskop
- 30: Dreheinrichtung
- 32: Dove-Prisma
- 33: Eintrittsseite von Dove-Prisma 32
- 34: Reflexionsfläche von Dove-Prisma 32
- 35: Austrittsseite von Dove-Prisma 32
- 36: Pupillenebene
- 38: Zwischenbildebene, optisch konjugiert zur Detektionsebene 26
- 40: Dreheinrichtung
- 50: Steuereinheit für Dreheinrichtung
- 51: Drehrichtung
- 52: Drehrichtung
- 60: Leuchtfeld
- 61: von einem ersten Beleuchtungsspot zurückgestrahltes Detektionslicht
- 63: auf die verzerrende Optik 20 einfallendes Licht
- 64: von der verzerrende Optik 20 zu der Detektionsebene 26 propagiertes Licht
- 65: Spektrum des von einem ersten Beleuchtungsspot zurückgestrahlten Detektionslichts
- 66: Spektrum des von einem zweiten Beleuchtungsspot zurückgestrahlten Detektionslichts
- 67: Spektrum des von einem dritten Beleuchtungsspot zurückgestrahlten Detektionslichts
- 68: Spektrum des von einem vierten Beleuchtungsspot zurückgestrahlten Detektionslichts
- 70: Detektionslicht, das der optischen Anordnung 400 zugeführt wird
- 100: optische Anordnung für ein erfindungsgemäßes Mikroskop
- 200: optische Anordnung für ein erfindungsgemäßes Mikroskop
- 300: erfindungsgemäßes Multispot-Scanning-Mikroskop
- 310: Mikroskopoptik
- 312: Probenebene
- 316: auf Probe 314 einfallendes Anregungslicht
- 318: von der Probe 314 abgestrahltes Detektionslichts
- 320: Lichtquellen-Modul
- 322: Anregungslicht
- 324: Detektionsstrahlengang, der optischen Anordnung 100 zugeführtes Detektionslicht
- 330: Steuereinheit
- 332: von Detektor 24 gelieferte Messdaten, Verbindungsleitung von optischer Anordnung 100 zu Steuereinheit 330
- 334: Ansteuerleitung von Steuereinheit 330 zu optischer Anordnung 100
- 400: optische Anordnung für ein erfindungsgemäßes Mikroskop

## Patentansprüche

1. Multispot-Scanning-Mikroskop,
mit einer Mikroskopoptik (310),
mit einem Beleuchtungsstrahlengang,
mit einem Detektionsstrahlengang (324) mit einer Detektionsebene (26), in der ein Detektor (24) positioniert ist, wobei die Detektionsebene (26) zu einer Probenebene (312) optisch konjugiert ist,
mit einer Lichtquelle (320) zum Bereitstellen von Anregungslicht (322) in dem Beleuchtungsstrahlengang,
mit einem Scanner und
mit einer dispersiven Einrichtung (10) zum spektralen Aufspalten von Detektionslicht (61, 62; 70; 324),
**dadurch gekennzeichnet,**
**dass** zum Leiten des Detektionslichts in die Detektionsebene (26) eine verzerrende Optik (20) vorhanden ist, die strahlabwärts von der dispersiven Einrichtung (10) und strahlaufwärts von der Detektionsebene (26) angeordnet ist, dass eine Dreheinrichtung (30; 40) vorhanden ist zum variablen relativen Verdrehen eines Leuchtfelds (60) des spektral aufgetrennten Detektionslichts und der verzerrenden Optik (20) in Abhängigkeit einer Anzahl von Beleuchtungsspots des Multispot-Scanning-Mikroskops, und
**dass** eine Steuereinheit (330) vorhanden ist zum Ansteuern der Dreheinrichtung (30) und der Lichtquelle (320) und zum mindestens vorläufigen Verarbeiten von Messdaten (332), die der Detektor (24) liefert.

2. Multispot-Scanning-Mikroskop nach Anspruch 1,
**dadurch gekennzeichnet,**
**dass** die verzerrende Optik (20) mindestens eine der folgenden Komponenten aufweist:
eine brechende und/oder spiegelnde anamorphotische Optik eine brechende und/oder spiegelnde Zylinderoptik (21),
eine feste oder variable Beugungsoptik, beispielsweise eine Phasenmaske, und/oder
einen räumlichen Lichtmodulator (SLM).

3. Multispot-Scanning-Mikroskop nach einem der Ansprüche 1 oder 2,
**dadurch gekennzeichnet,**
**dass** der Detektor (24) ein GaAsP-Detektor, ein Photomultiplier, ein SPAD-Array oder eine schnelle Kamera ist.

4. Multispot-Scanning-Mikroskop nach Anspruch 3,
**dadurch gekennzeichnet,**
**dass** der Detektor ein Zeilendetektor (24) ist und
**dass** eine Längsrichtung des Zeilendetektors (24) parallel zu einer Achse (22) der verzerrenden Optik (20) ausgerichtet ist.

5. Multispot-Scanning-Mikroskop nach einem der Ansprüche 1 bis 4,
**dadurch gekennzeichnet,**
**dass** die verzerrende Optik (20) relativ zur dispersiven Einrichtung (10) feststeht.

6. Multispot-Scanning-Mikroskop nach einem der Ansprüche 1 bis 5,
**dadurch gekennzeichnet,**
**dass** die verzerrende Optik (20) mit der Dreheinrichtung (40) relativ zu der dispersiven Einrichtung (10) verdrehbar ist.

7. Multispot-Scanning-Mikroskop nach einem der Ansprüche 1 bis 6,
**dadurch gekennzeichnet,**
**dass** die Dreheinrichtung mindestens einen Drehspiegel und/oder mindestens ein Drehprisma (32), insbesondere ein Abbe-König-Prisma oder ein Dove-Prisma (32), aufweist.

8. Multispot-Scanning-Mikroskop nach Anspruch 7,
**dadurch gekennzeichnet,**
**dass** das Drehprisma (32) an einem Ort einer engsten Einschnürung des Strahlengangs, insbesondere in einer Pupillenebene (36), angeordnet ist.

9. Multispot-Scanning-Mikroskop nach einem der Ansprüche 1 bis 8,
**dadurch gekennzeichnet,**
**dass** als dispersive Einrichtung (10) eine brechende Komponente, insbesondere ein Prisma, und/oder eine beugende Komponente, insbesondere ein Beugungsgitter (14) vorhanden ist.

10. Multispot-Scanning-Mikroskop nach einem der Ansprüche 1 bis 9,
**dadurch gekennzeichnet,**
**dass** die Zylinderoptik (20) durch eine einzige Zylinderlinse (21) gebildet ist.

11. Multispot-Scanning-Mikroskop nach einem der Ansprüche 1 bis 10,
**dadurch gekennzeichnet,**
**dass** zum Anpassen eines Abbildungsmaßstabs, insbesondere an Abmessungen eines verwendeten Detektors (24), eine Teleskopoptik mit einer ersten und einer zweiten Linse (27, 29) vorhanden ist, wobei die verzerrende Optik (20) und die Dreheinrichtung (30), insbesondere das Drehprisma (32), zwischen der ersten und der zweiten Linse (27, 29) des Teleskops angeordnet sind.

12. Multispot-Scanning-Mikroskop nach einem der Ansprüche 1 bis 11,
**dadurch gekennzeichnet,**
**dass** eine Zoom-Optik vorhanden ist zum Anpassen eines Abbildungsmaßstabs, insbesondere an Abmessungen eines verwendeten Detektors (24).

13. Multispot-Scanning-Mikroskop nach einem der Ansprüche 1 bis 12,
**dadurch gekennzeichnet,**
**dass** eine Achse der Relativdrehung zwischen der verzerrenden Optik (20), beispielsweise der Zylinderoptik (20), und dem Leuchtfeld quer, insbesondere senkrecht, orientiert ist zu einer Achse der verzerrenden Optik (20).

14. Verfahren zum Betreiben eines Mikroskops nach einem der Ansprüche 1 bis 13, bei dem mit der Dreheinrichtung (30; 40) in Abhängigkeit einer Anzahl von Beleuchtungsspots eine Drehstellung des Leuchtfelds (60) relativ zu der verzerrenden Optik (20) eingestellt wird.

15. Verfahren nach Anspruch 14,
**dadurch gekennzeichnet,**
**dass** je nach Stellung der Dreheinrichtung (30; 40) das Spektrum (65) von einem Beleuchtungsspot, die Spektren (65, 67) von zwei Beleuchtungsspots oder die Spektren (65, 66, 67, 68) von vier Beleuchtungsspots auf den Detektor abgebildet werden.

## Claims

1. Multi-spot scanning microscope, comprising:
a microscope optical unit (310),
an illumination beam path,
a detection beam path (324) having a detection plane (26), in which a detector (24) is positioned, the detection plane (26) being optically conjugate to a sample plane (312),
a light source (320) for providing excitation light (322) in the illumination beam path,
a scanner and
a dispersive device (10) for spectrally separating detection light (61, 62; 70; 324),
**characterized**
**in that** a distortion optical unit (20) is provided for guiding the detection light into the detection plane (26), said distortion optical unit being arranged, in the beam direction, downstream of the dispersive device (10) and upstream of the detection plane (26),
**in that** a rotation device (30; 40) is present for the variable relative rotation of a luminous field (60) of the spectrally separated detection light and the distortion optical unit (20) in dependence on a number of illumination spots of the multi-spot scanning microscope, and
**in that** a control unit (330) is present for actuating the rotation device (30) and the light source (320) and for at least provisionally processing measurement data (332) provided by the detector (24).

2. Multi-spot scanning microscope according to claim 1, **characterized**
**in that** the distortion optical unit (20) includes at least one of the following components:
a refractive and/or reflective anamorphic optical unit,
a refractive and/or reflective cylindrical optical unit (21),
a fixed or variable diffraction optical unit, for example a phase mask, and/or
a spatial light modulator (SLM).

3. Multi-spot scanning microscope according to any one of claims 1 or 2,
**characterized**
**in that** the detector (24) is a GaAsP detector, a photomultiplier, a SPAD array, or a fast camera.

4. Multi-spot scanning microscope according to claim 3, **characterized**
**in that** the detector is a line detector (24) and
**in that** a longitudinal direction of the line detector (24) is oriented parallel to an axis (22) of the distortion optical unit (20).

5. Multi-spot scanning microscope according to any one of claims 1 to 4,
**characterized**
**in that** the distortion optical unit (20) is fixed relative to the dispersive device (10).

6. Multi-spot scanning microscope according to any one of claims 1 to 5,
**characterized**
**in that** the distortion optical unit (20) is rotatable relative to the dispersive device (10) by means of the rotation device (40).

7. Multi-spot scanning microscope according to any one of claims 1 to 6,
**characterized**
**in that** the rotation device includes at least one rotation mirror and/or at least one rotation prism (32), in particular an Abbe-Koenig prism or a Dove prism (32).

8. Multi-spot scanning microscope according to claim 7, **characterized**
**in that** the rotation prism (32) is arranged at a location of a tightest constriction of the beam path, in particular in a pupil plane (36).

9. Multi-spot scanning microscope according to any one of claims 1 to 8,
**characterized**
**in that** a refractive component, in particular a prism, and/or a diffractive component, in particular a diffractive grating (14), is present as the dispersive device (10).

10. Multi-spot scanning microscope according to any one of claims 1 to 9,
**characterized**
**in that** the cylindrical optical unit (20) is formed by a single cylindrical lens (21).

11. Multi-spot scanning microscope according to any one of claims 1 to 10,
**characterized**
**in that** a telescope optical unit with a first and a second lens (27, 29) is present for adapting an imaging scale, in particular to dimensions of a detector (24) that is used, wherein the distortion optical unit (20) and the rotation device (30), in particular the rotation prism (32), are arranged between the first and the second lens (27, 29) of the telescope.

12. Multi-spot scanning microscope according to any one of claims 1 to 11,
**characterized**
**in that** a zoom optical unit is present for adapting an imaging scale, in particular to dimensions of a detector (24) that is used.

13. Multi-spot scanning microscope according to any one of claims 1 to 12,
**characterized**
**in that** an axis of the relative rotation between the distortion optical unit (20), for example the cylindrical optical unit (20), and the luminous field is oriented transversely, in particular perpendicularly, to an axis of the distortion optical unit (20).

14. Method for operating a microscope according to any one of claims 1 to 13, in which a rotation position of the luminous field (60) relative to the distortion optical unit (20) is set by means of the rotation device (30; 40) in dependence on a number of illumination spots.

15. Method according to claim 14,
**characterized**
**in that**, depending on the position of the rotation device (30; 40), the spectrum (65) of one illumination spot, the spectra (65, 67) of two illumination spots or the spectra (65, 66, 67, 68) of four illumination spots are imaged onto the detector.

## Revendications

1. Microscope à balayage multipoints, comprenant
une optique de microscope (310),
un trajet de faisceau d'éclairage,
un trajet de faisceau de détection (324) avec un plan de détection (26) dans lequel est positionné un détecteur (24), dans lequel le plan de détection (26) est optiquement conjugué à un plan d'échantillon (312),
une source lumineuse (320) pour la fourniture d'une lumière d'excitation (322) dans le trajet de faisceau d'éclairage,
un scanneur et
un dispositif dispersif (10) pour la scission spectrale d'une lumière de détection (61, 62; 70; 324),
**caractérisé en ce que**
pour guider la lumière de détection jusque dans le plan de détection (26), une optique de distorsion (20) est présente qui est agencée en aval de faisceau du dispositif dispersif (10) et en amont de faisceau du plan de détection (26),
**en ce qu'**un dispositif de rotation (30; 40) est présent pour la torsion relative variable d'un champ lumineux (60) de la lumière de détection séparée de façon spectrale et de l'optique de distorsion (20) en fonction d'un nombre de points d'éclairage du microscope à balayage multipoints, et
**en ce qu'**une unité de commande (330) est présente pour le pilotage du dispositif de rotation (30) et de la source lumineuse (320) et pour le traitement au moins provisoire de données de mesure (332) que le détecteur (24) livre.

2. Microscope à balayage multipoints selon la revendication 1,
**caractérisé en ce que**
l'optique de distorsion (20) présente au moins l'une des composantes suivantes :
une optique anamorphotique réfringente et/ou spéculaire,
une optique cylindrique (21) réfringente et/ou spéculaire,
une optique de diffraction fixe ou variable, par exemple un masque de phase, et/ou
un modulateur de lumière spatial (SLM).

3. Microscope à balayage multipoints selon l'une des revendications 1 ou 2,
**caractérisé en ce que**
le détecteur (24) est un détecteur GaAsP, un photomultiplicateur, un réseau SPAD ou une caméra rapide.

4. Microscope à balayage multipoints selon la revendication 3,
**caractérisé en ce que**
le détecteur est un détecteur de lignes (24) et
**en ce qu'**une direction longitudinale du détecteur de lignes (24) est orientée parallèlement à un axe (22) de l'optique de distorsion (20).

5. Microscope à balayage multipoints selon l'une des revendications 1 à 4,
**caractérisé en ce que**
l'optique de distorsion (20) est fixe par rapport au dispositif dispersif (10).

6. Microscope à balayage multipoints selon l'une des revendications 1 à 5,
**caractérisé en ce que**
l'optique de distorsion (20) peut être tordue avec le dispositif de rotation (40) relativement au dispositif dispersif (10).

7. Microscope à balayage multipoints selon l'une des revendications 1 à 6,
**caractérisé en ce que**
le dispositif de rotation présente au moins un miroir tournant et/ou au moins un prisme tournant (32), en particulier un prisme d'Abbe-König ou un prisme de Dove (32).

8. Microscope à balayage multipoints selon la revendication 7,
**caractérisé en ce que**
le prisme tournant (32) est agencé en un emplacement d'un rétrécissement le plus étroit du trajet de faisceau, en particulier dans un plan de pupille (36).

9. Microscope à balayage multipoints selon l'une des revendications 1 à 8,
**caractérisé en ce que**
en tant que dispositif dispersif (10) est présente une composante réfringente, en particulier un prisme, et/ou une composante diffractive, en particulier un réseau de diffraction (14).

10. Microscope à balayage multipoints selon l'une des revendications 1 à 9,
**caractérisé en ce que**
l'optique cylindrique (20) est constituée d'une unique lentille cylindrique (21).

11. Microscope à balayage multipoints selon l'une des revendications 1 à 10,
**caractérisé en ce que**
pour l'ajustement d'une échelle de représentation, en particulier à des dimensions d'un détecteur (24) utilisé, est présente une optique de télescope avec une première et une seconde lentille (27, 29), dans lequel l'optique de distorsion (20) et le dispositif de rotation (30), en particulier le prisme tournant (32), sont agencés entre la première et la seconde lentille (27, 29) du télescope.

12. Microscope à balayage multipoints selon l'une des revendications 1 à 11,
**caractérisé en ce que**
une optique de zoom est présente pour l'ajustement d'une échelle de représentation, en particulier à des dimensions d'un détecteur (24) utilisé.

13. Microscope à balayage multipoints selon l'une des revendications 1 à 12,
**caractérisé en ce que**
un axe de la torsion relative entre l'optique de distorsion (20), par exemple l'optique cylindrique (20), et le champ lumineux est orienté transversalement, en particulier perpendiculairement, à un axe de l'optique de distorsion (20).

14. Procédé d'exploitation d'un microscope selon l'une des revendications 1 à 13, dans lequel, avec le dispositif de rotation (30; 40) et en fonction d'un nombre de points d'éclairage, une position de rotation du champ lumineux (60) est réglée relativement à l'optique de distorsion (20).

15. Procédé selon la revendication 14,
**caractérisé en ce que**
selon la position du dispositif de rotation (30; 40), sont représentés sur le détecteur le spectre (65) d'un point d'éclairage, les spectres (65, 67) de deux points d'éclairage ou les spectres (65, 66, 67, 68) de quatre points d'éclairage.
